# EUROPEAN PATENT SPECIFICATION

(11) **EP 2 644 436 B1**
(45) Date of publication and mention of the grant of the patent: **30.05.2018**
(21) Application number: 12161614.8
(22) Date of filing: 27.03.2012
(51) Int. Cl.: B60L 9/16

(54) **Improved hard pre-charge for parallel inverters**
Verbessertes starkes Vorladen für Parallelwandler
Préchargement dur amélioré pour inverseurs parallèles

(43) Date of publication of application: 02.10.2013
(73) Proprietor: ALSTOM Transport Technologies, 93400 Saint-Ouen (FR)
(72) Inventor: Barlini, Davide, I-20099 Sesto San Giovanni (Milano) (IT)
(74) Representative: Karaghiosoff, Giorgio Alessandro

(56) References cited:
- DE-C1- 19 547 465
- US-A1- 2011 248 564

## Description

The present invention relates to an improved hard pre-charge device for parallel inverters in a traction system for railway comprising at least two different motors,
each motor being controlled by means of at least one of two inverters which are connected in parallel to a common power line that supplies a DC power signal by means of a respective DC-link, an isolation switch being provided for each of said two inverters, which isolates the corresponding inverter from said power line, each inverter being further connected to the common power line by a filter capacitor bank and means for pre-charging said capacitor banks, which pre-charging means include a crow bar resistor and an automatic power switch which transfers the DC power signal to said crow bar resistor when voltage exceeds a predetermined threshold.

Traction systems of the above kind are known.

One example of known traction system is described in document US 2011/248564.

This document discloses an electric power converting system including a common DC power supply, and a plurality of inverter sets operated mutually independently to one another, and supplied with electric power from the common DC power supply. Each inverter set has an inverter circuit and a main circuit capacitor. The system further includes a plurality of first and second switching circuits. Each first switching circuit is provided between the common DC power supply and each inverter set, and **each second** switching circuit is provided in each inverter set for discharging charges in the main circuit capacitor. This document discloses a device according to the preamble of claim 1. In the known systems large banks of filter capacitors are provided at the inputs of each inverter in order to filter the harmonic content of the power line and to store locally energy ensuring the functionalities of the inverters. Such kind of **traction system is disclosed for example in Recent** Advances in power electronics technology for Industrial and Traction Machine Drives, Thomas M. Jahns and Vladimir Blasko Proceedings of the IEEE VOL.89, No. 6 June 2001.

Two charging systems are known in the art under the names of Soft and Hard Pre-charges.

The so-called "soft" pre-charging systems use a resistor and a switch to connect and disconnect such resistor in series to and from the power signal supply line. During pre-charging of capacitor banks, the power signal is supplied through this resistor and voltage in the capacitors increases at a slow rate, whereby no overvoltage occurs that might damage the electronic components of the control system.

The switch for connecting and disconnecting the resistor to and from the path of the power signal and the resistor itself are always connected to high voltage and in case of damage the traction system will no longer be in working conditions.

Systems are known in which there is no resistor, but only the isolation switch, which directly connects the inverter and the filter capacitor to the power signal. A filter inductor typically limits the input current to avoid actuation of protection devices. On the other hand, overvoltages are handled **by a protection** resistor, i.e. a crow bar resistor. An automatic power switch, such as a chopper. transfers the power signal to the crow bar resistor by isolating the inverter and the corresponding filter capacitor from said signal when voltage exceeds a predetermined maximum admitted voltage threshold whereas, when voltage falls below a second predetermined threshold value, lower than the former, the switch reestablishes connection of the inverter and the corresponding filter capacitor with the power signal.

In these solutions, part of the energy is dissipated within the crow bar resistor. Furthermore, when the control system includes two inverters, each connected to the power signal in parallel with the other inverter via a DC link, and each of which inverters controls a different motor, the connection stages of both inverters are connected to the power signal, and hence the input current is very high.

The invention has the object of providing a traction system as described hereinbefore, in which if two inverters are connected in parallel and control two different motors, the input current may be maintained at a low level, thereby affording energy savings. The invention refers to a device according to claim 1 and to a method according to claim 7. The invention fulfills the above object by the provision that, in a system as described hereinabove, i.e. a traction system for railway comprising at least two different motors,
each motor being controlled by means of a least one of two inverters which are connected in parallel to a common power line that supplies a DC power signal by means of a respective DC-link, an isolation switch being provided for each of said two inverters, which isolates the corresponding inverter from said power line, each inverter being further connected to the common power line by a filter capacitor bank and means for pre-charging said capacitor banks, which pre-charging means include a crow bar resistor and an automatic power switch which transfers the DC power signal to said crow bar resistor when voltage exceeds a predetermined threshold,
and in which traction system, there are provided for alternately closing the isolation switches of one of the two inverters and a connection diverting the power signal from the crow bar resistor of the inverter connected to the power signal supply line by the said automatic power switch to the filter capacitor bank of the other inverter which is isolated from the power signal supply line.

According to a further feature, a filter inductor is provided at the inputs of both DC-links connecting the DC signal to the inverters, for limiting the input current during pre-charging of the filter capacitor banks.

In one embodiment, said automatic switches for transferring the power signal to an overvoltage protection resistor, i.e. a crow bar resistor, consist of a semiconductor switch such as a transistor or a chopper performing the function of diverting the power signal from the capacitor bank to an overvoltage protection branch comprising said crow bar resistor and said connection, as a predetermined first maximum voltage threshold is exceeded, whereas said means supply again the power signal to the capacitor bank when voltage falls below a second voltage threshold value, which is lower than said first maximum voltage threshold value.

The resistive connection means connect together the two crow bar resistors in the overvoltage protection branches, thereby transferring the power signal to be dissipated in the crow bar resistor to the filter capacitor bank of the inverter that is currently isolated from the power signal.

In a more particular embodiment, each inverter is connected in parallel to a filter capacitor bank, a switching chopper is connected by its emitter and collector to an overvoltage protection branch which is in parallel with the capacitor bank downstream from the isolation switch and which protection branch comprises a crow bar resistor and a pair of diodes in series, one of which is in parallel with the chopper and the other is in parallel with the crow bar resistor, whereas a resistance is provided for connecting the two overvoltage protection branches, means being further provided for alternately controlling the isolation switches of the two connection stages of the two inverters to the closed and open states.

In a further improvement, a filter may be provided at the input of the connection stages, for filtering off resonant voltages and currents arising upon alternate isolation of the two inverters of the power line.

Firstly, the characteristics of the present invention allow recovery of part of the energy of the power signal supplied to one of the filter capacitor bank, for charging the said filter capacitor bank of one of the two inverters, which would be otherwise dissipated in the overvoltage protection resistor, of the connection stage of the other one of the two inverters.

Furthermore, since the inverters and their respective DC links are alternately connected to the power line, the input current is kept at a low level, i.e. at the value requested by one of the two inverters whereas, in case of overvoltage, the power signal diverted by the inverter connected to the power line is fed to the filter capacitor bank of the inverter isolated from the power line and is stored in said capacitor bank instead of being dissipated by the crow bar resistor.

The invention also relates to an electric locomotive which comprises at least two bogies and at least two motors, each driving at least one axle of one of said two bogies or each of said two bogies, and which motors are controlled by an inverter of a traction system according to one or more of the embodiments disclosed above.

The invention also relates also to a method of controlling two traction motors, particularly of railway vehicles or the like, each of which motors is controlled by a distinct inverter and which inverters are supplied in parallel with each other with a DC power signal, each one via a DC-link, a pre-charge input capacitor being connected in parallel to each inverter for storing a predetermined amount of electric energy for driving the corresponding inverter, while the power signal voltage in the DC-link of each inverter is being monitored, said DC-link being isolated from said signal when an overvoltage is detected, and said power signal being diverted to the pre-charge input capacitor of the other inverter when said overvoltage is detected for charging the said capacitor.

In one improvement, the power signal is alternately supplied to the one and the other of the two inverters, in case of overvoltage said signal being diverted from the input capacitor of the inverter that receives the supplied power signal to the input capacitor of the inverter that does not receive the power signal.

Further characteristics and improvements will form the subject of the claims appended hereto.

These and other characteristics and advantages of the invention will be more apparent from the following description of a few embodiments shown in the accompanying drawings, in which:
Fig. 1 shows a circuit diagrams of prior art.
Fig. 2 is a circuit diagram of a control system of the present invention.
Fig. 3 shows the behavior of voltages in the capacitor banks as indicated by the capacitors C1 and C2 during the pre-charging process using the system of the present invention.
Fig. 4 shows the pattern of current during the pre-charging process using the system of the present invention.

Usually electric locomotives have two bogies driven by motors and which motors of each bogie are controlled by a dedicated inverter. This is not the only possible configuration, but merely an example that shows that the locomotive has two parallel inverters, each controlling at least one different motor.

The power signal can be collected from a overhead line using a pantograph or in other ways which are all known from the state of the art. The signal can be an AC signal or a DC signal. In the case of an AC signal this signal first undergoes a transformation in a transformer. A line switch is provided between the pantograph or the signal input or signal generator and the transformer. The secondary of the transformer is connected to a rectifier, which turns the AC signal into a DC signal, whereupon the DC signal is supplied from said rectifier to the inputs of the two inverters for controlling the motors 2 of the bogies by means of a DC connection unit, so-called DC-link.

The inverters change the input signal into a generally three-phase AC signal having optimized waveform and frequency, amplitude, etc. parameters, the latter varying according to the desired locomotive travel condition.

As a rule, these functions are widely known by and familiar to a person of ordinary skill in the art.

As already indicated the high-voltage power signal may be provided in the form of a DC signal or may be generated by the conversion of other kinds of energy into electric power, such as in the case of diesel-electric locomotives, which use a diesel engine to generate electric power to be supplied to motors, using an alternator.

In short, the example described shall not be intended as limiting the use of the invention to a single type of locomotive, rather it will be applicable to any condition in which multiple electric motors are required to be powered by multiple inverters, which shall be able to be individually isolated in case of malfunctioning, without affecting the operation of the remaining inverters and motors and without completely sacrificing the availability of a given traction force.

The connection units usually have filter capacitor banks that have to be pre-charged for proper operation of the inverter. These banks are charged by introducing a charging resistor into the circuit that supplies the power signal from the rectifier and which resistor has the purpose of keeping voltage within predetermined maximum values as the filter capacitor is being charged.

When two parallel inverters are provided the capacitor banks of the connection unit of each inverter are pre-charged separately from the capacitor banks associated with the other, second inverter. By this arrangement, the charging current may be kept within predetermined limits.

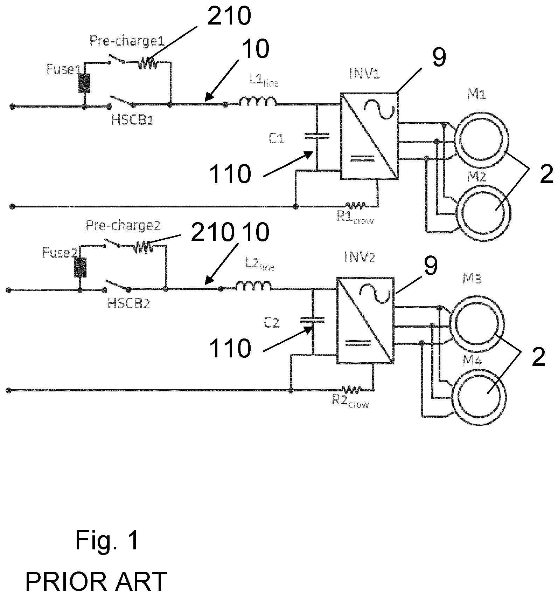

Figure 1 is an example of the feeding circuit according to the prior art when used in the configuration comprising two parallel inverters 9, each being powered by a connection unit 10 having its respective filter capacitor bank 110 and a charging resistor 210.

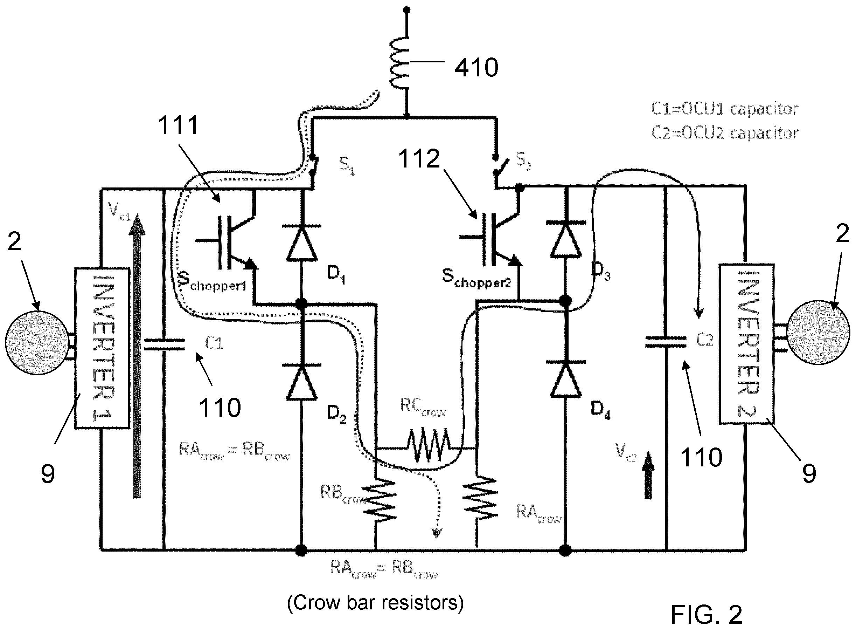

Figure 2 shows a cable-and-trunk schematic of the control system of the present invention and particularly of the connection unit. The power signal is filtered and subject to current limitation by the inductor 410. In the illustrated example, the first capacitor bank 110 to be charged is the one, designated as C1, of one of the two inverters 9, and the second capacitor bank 110 to be charged is the one designated as C2, of the other inverter 9. The isolation switch S1 is closed while the switch S2 that connects the second inverter 9, known as inverter 2, is open.

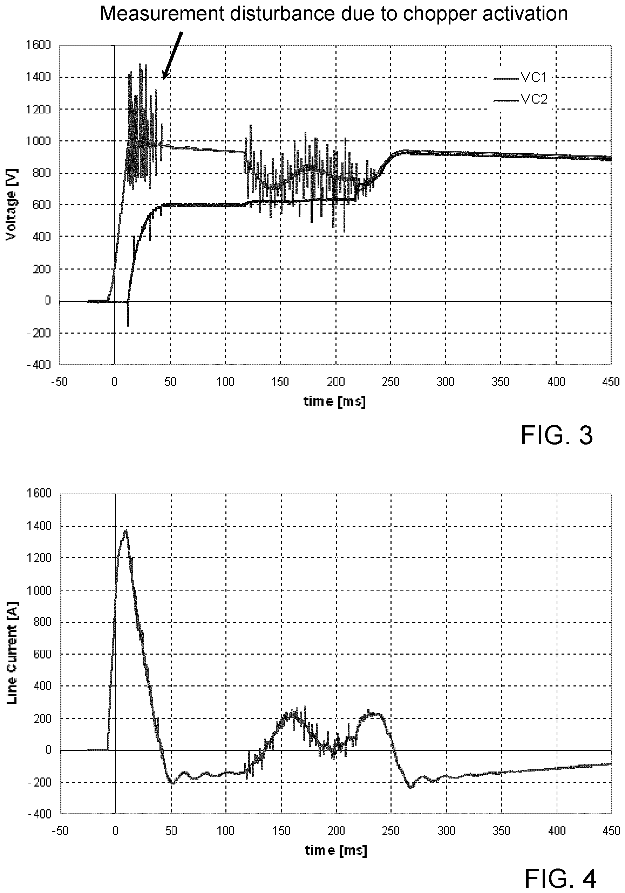

Automatic switching means 111, 112, consisting of a chopper, divert the power signal from the capacitor bank being charged when voltage rises above a predetermined threshold value. In particular, for the performed test of figure 3, once voltage VC1 overcomes 975V the switch 111 closes automatically to regulate voltage. As consequence the extra energy stored into C1 is diverted into C2 by the connection resistor RCcrow, via the diode D3 to the capacitor bank designated as C2, which starts thereupon to be charged. The lines show the path of the power signal. It is worth to point out that without the described path (RCcrow and D3 of Figure 2), the signal is dissipated by either crow bar resistor Racrow or Rbcrow, depending on which capacitor bank is directly connected to the power signal at that time and is being pre-charged.

It may be thus appreciated that part of the energy that would otherwise have been dissipated by the protection resistors is recovered and used for charging the capacitor bank that currently is not being charged.

Figure 3 shows the voltage pattern and Figure 4 the current pattern related to time.

The chart of Figure 3 shows the voltage pattern at the ends of the capacitor bank 1 and the capacitor bank 2. It may be appreciated that, as chopper 111 regulates VC1 voltage, the voltage of the capacitor bank C2 starts to increase, to reach the level of the voltage of the capacitor bank 1 after a short time.

The chart of Figure 4 shows the current in the line. It will be appreciated that, upon actuation of the chopper 1, the current that was increasing starts to drop, because a part thereof is transferred to charge the capacitor bank C2 and the other part is dissipated in the resistor RAcrow.

The above description clearly shows the peculiarity of the present invention, consisting in allowing alternate connection of the two parallel-operating inverters to the power signal. This alternate connection allows half the current to be used during pre-charge and affords energy savings, due to the use of the redundant energy for charging the inverter that is respectively isolated from the power signal instead of dissipating this energy with protection resistors to limit the above voltage values within predetermined limits.

## Claims

1. Improved hard pre-charge device of parallel inverters in a traction system for railway comprising at least two different motors,
each motor (2) being controlled by means of at least one of two inverters (9) which are connected in parallel to a common power line that supplies a DC power signal by means of a respective DC-link, an isolation switch (S1, S2) being provided for each of said two inverters, which isolates the corresponding inverter from said power line, each inverter being further connected to the common power line by a filter capacitor bank (C1, C2), the hard pre-charge device comprising means for pre-charging said capacitor banks, which pre-charging means include a crow bar resistor (Racrow, Rbcrow) and an automatic power switch (111, 112) which transfers the DC power signal to said crow bar resistor when voltage exceeds a predetermined threshold,
**characterized in that** it further comprises means for alternately closing the isolation switches (S1, S2) of the two inverters (9) and a connection (Rccrow, D3), diverting the power signal from the crow bar resistor (Racrow, Rbcrow) of the inverter connected to the power signal supply line by the said automatic power switch (111, 112) to the filter capacitor bank (C1, C2) of the other inverter which is isolated from the power signal supply line.

2. Device as claimed in claim 1, wherein a filter inductor is provided at the inputs of both DC-links connecting the DC signal to the inverters, for limiting the input current during pre-charging of the filter capacitor banks.

3. Device as claimed in claim 1 or 2, wherein said automatic power switches for transferring the power signal to an overvoltage protection branch overvoltage protection resistor comprising a semiconductor switch, such as a transistor or a chopper, performing the function of diverting the power signal from the first capacitor bank to the overvoltage protection branch comprising said crow bar resistor, as a predetermined first maximum voltage threshold is exceeded, whereas said means supply the power signal to the second capacitor bank until voltage falls below a second voltage threshold value, which is lower than said first maximum voltage threshold value.

4. Device as claimed in one or more of the preceding claims, wherein a resistive connection means connect together the two crow bar resistors in the overvoltage protection branches, thereby transferring the power signal to be dissipated in the crow bar resistor to the filter capacitor bank of the inverter that is currently isolated from the power signal.

5. Device as claimed in one or more of the preceding claims, wherein each inverter is connected in parallel to a filter capacitor bank, a switching chopper is connected by its emitter and collector to an overvoltage protection branch which is in parallel with the capacitor bank downstream from the isolation switch and which overvoltage protection branch comprises a crow bar resistor and a pair of diodes in series, one of which is in parallel with the chopper and the other is in parallel with the crow bar resistor, whereas a resistance is provided for connecting the two overvoltage protection branches.

6. An electric locomotive **characterized in that** it comprises at least two bogies and at least two motors, each driving at least one axle of one of said two bogies or each of said two bogies, and which motors are each controlled by a distinct inverter of a control system, which system comprises a hard pre-charge device according to one or more of the preceding claims 1 to 5.

7. A method of controlling two traction motors, particularly of railway vehicles or the like, each of which motors is controlled by a distinct inverter and which inverters are supplied in parallel with each other with a DC power signal, each one via a DC-link, a pre-charge input capacitor being connected in parallel to each inverter for storing a predetermined amount of electric energy for driving the corresponding inverter, while the power signal voltage in the DC-link of each inverter is being monitored,
**characterized in that** the power signal is alternately supplied to one or the other of the two inverters, when an overvoltage is detected, said signal being diverted from the pre-charge input capacitor of the inverter that receives the supplied power signal to the pre-charge input capacitor of the inverter that does not receive the power signal for charging said capacitor.

## Patentansprüche

1. Verbesserte starke Vorladevorrichtung von parallelen Invertern in einem Traktionssystem für Schienenfahrzeuge mit mindestens zwei verschiedenen Motoren, wobei jeder Motor (2) über mindestens einen von zwei Invertern (9) gesteuert wird, die mit einer gemeinsamen Stromleitung parallel geschaltet sind, welche über je einen Gleichstromzwischenkreis ein Gleichstromleistungssignal liefert, mit einem für jeden der zwei Inverter jeweils vorgesehenen Trennschalter (S1, S2), der den entsprechenden Inverter von der Stromleitung trennt, wobei jeder Inverter ferner über eine Filterkondensatorbank (C1, C2) mit der gemeinsamen Stromleitung verbunden ist und die starke Vorladevorrichtung Mittel zum Vorladen der Kondensatorbänke aufweist, wobei die Vorlademittel einen Crowbar-Widerstand (Racrow, Rbcrow) und einen automatischen Leistungsschalter (111, 112) umfassen, der das Gleichstromleistungssignal an den Crowbar-Widerstand überträgt, wenn die Spannung eine vorbestimmte Schwelle überschreitet, **dadurch gekennzeichnet, dass** ferner Mittel vorgesehen sind zum abwechselnden Schließen der Trennschalter (S1, S2) der beiden Inverter (9) und eine Verbindung (Rccrow, D3) zum Umleiten des Leistungssignals von dem Crowbar-Widerstand (Racrow, Rbcrow) des mit der Stromversorgungsleitung über den automatischen Leistungsschalter (111, 112) verbundenen Inverters zu der Filterkondensatorbank (C1, C2) des anderen Inverters, der von der Leistungssignalzuleitung getrennt ist.

2. Vorrichtung nach Anspruch 1, wobei an den Eingängen der beiden das Gleichstromsignal mit den Invertern verbindenden Gleichstromzwischenkreise eine Filterinduktivität zur Begrenzung des Eingangsstroms beim Vorladen der Filterkondensatorbänke vorgesehen ist.

3. Vorrichtung nach Anspruch 1 oder 2, wobei die automatischen Leistungsschalter zum Übertragen des Leistungssignals an einen Überspannungsschutzzweig-Überspannungsschutzwiderstand einen Halbleiterschalter aufweisen, wie z. B. einem Transistor oder einem Chopper, zum Durchführen der Umleitfunktion des Leistungssignals von der ersten Kondensatorbank zu dem den Crowbar-Widerstand aufweisenden Überspannungsschutzzweig bei Überschreiten einer vorgegebenen ersten maximalen Spannungsschwelle, während diese Mittel das Leistungssignal an die zweite Kondensatorbank liefern, bis die Spannung unter einen zweiten Spannungsschwellwert fällt, der niedriger ist als der erste maximale Spannungsschwellenwert.

4. Vorrichtung nach einem oder mehreren der vorhergehenden Ansprüche, wobei ein resistives Verbindungsmittel die beiden Crowbar-Widerstände in den Überspannungsschutzzweigen miteinander verbindet, wodurch das im Crowbar-Widerstand abzuführende Leistungssignal an die von dem Leistungssignal aktuell isolierte Filterkondensatorbank des Inverters übertragen wird.

5. Vorrichtung nach einem oder mehreren der vorhergehenden Ansprüche, wobei jeder Inverter mit einer Filterkondensatorbank parallel geschaltet ist, ein Schalt-Zerhacker durch seinen Emitter und Kollektor mit einem Überspannungsschutzzweig verbunden ist, der mit der Kondensatorbank stromabwärts des Trennschalters parallel geschaltet ist und wobei der Überspannungsschutzzweig einen Crowbar-Widerstand und ein Paar von Dioden in Reihe umfasst, von denen die eine parallel zum Chopper und die andere parallel zum Crowbar-Widerstand angeordnet ist, wobei zur Verbindung der beiden Überspannungsschutzzweige ein Widerstand vorgesehen ist.

6. Elektrische Lokomotive **dadurch gekennzeichnet, dass** sie mindestens zwei Drehgestelle und mindestens zwei Motoren umfasst, die jeweils mindestens eine Achse eines der beiden Drehgestelle oder jedes der beiden Drehgestelle antreiben, und wobei die Motoren jeweils von einem eigenen Inverter eines Steuersystems angesteuert werden, welches System eine starke Vorladevorrichtung nach einem oder mehreren der vorhergehenden Ansprüche 1 bis 5 umfasst.

7. Verfahren zur Steuerung von zwei Traktionsmotoren, insbesondere von Schienenfahrzeugen oder dergleichen, von denen jeder Motor von einem eigenen Inverter angesteuert wird und welche Inverter parallel zueinander mit einem Gleichstrom-Leistungssignal versorgt werden, jeweils über einen Gleichstromzwischenkreis, wobei mit jedem Inverter ein Vorladeeingangskondensator zur Speicherung einer vorgegebenen Menge elektrischer Energie zum Ansteuern des entsprechenden Inverters parallel geschaltet ist, während die Leistungssignalspannung im Gleichstromzwischenkreis jedes Inverters überwacht wird, **dadurch gekennzeichnet, dass** das Leistungssignal abwechselnd dem einen oder dem anderen der beiden Inverter bei Erfassung einer Überspannung zugeführt wird, wobei das Signal von dem Vorladeeingangskondensator des Inverters, der das zugeführte Leistungssignal empfängt, zu dem Vorladeeingangskondensator des Inverters, der das Leistungssignal nicht empfängt, zum Laden des Kondensators umgeleitet wird.

## Revendications

1. Dispositif amélioré de précharge directe d'inverseurs parallèles dans un système de traction ferroviaire comprenant au moins deux moteurs différents,
chaque moteur (2) étant commandé par au moins un de deux inverseurs (9) connectés en parallèle à une ligne électrique commune, qui fournit un signal d'alimentation en courant continu au moyen d'une liaison à courant continu, un interrupteur séparateur (S1, S2) étant prévu pour chacun desdits deux inverseurs, séparant l'inverseur correspondant de ladite ligne électrique, chaque inverseur étant également connecté à la ligne électrique commune par un banc de condensateurs de filtrage (C1, C2), le dispositif de précharge directe comprenant des moyens pour précharger lesdits bancs de condensateurs, lesdits moyens de précharge comprenant une résistance de protection à thyristor (Racrow, Rbcrow) et un interrupteur automatique (111, 112) transférant le signal d'alimentation en courant continu à ladite résistance de protection à thyristor lorsque la tension est supérieure à un seuil prédéterminé,
**caractérisé en ce qu'**il comprend également des moyens pour fermer en alternance les interrupteurs séparateurs (S1, S2) des deux inverseurs (9) et une connexion (Rccrow, D3) déviant le signal d'alimentation de la résistance de protection à thyristor (Racrow, Rbcrow) de l'inverseur connecté à la ligne des signaux d'alimentation par ledit interrupteur automatique (111, 112) vers le banc de condensateurs de filtrage (C1, C2) de l'autre inverseur, isolé de la ligne des signaux d'alimentation.

2. Dispositif selon la revendication 1, dans laquelle une inductance de filtrage est placée aux entrées des deux liaisons à courant continu reliant le signal en courant continu aux inverseurs, pour limiter le courant en entrée pendant la précharge des bancs de condensateurs de filtrage.

3. Dispositif selon la revendication 1 ou 2, dans lequel lesdits interrupteurs automatiques destinés à transférer le signal d'alimentation à une résistance de protection contre les surtensions d'une branche de protection contre les surtensions comprennent un interrupteur à semi-conducteur, comme un transistor ou un découpeur, ayant la fonction de dévier le signal d'alimentation du premier banc de condensateurs à la branche de protection contre les surtensions comprenant ladite résistance de protection à thyristor, lors du dépassement d'un premier seuil de tension maximale prédéterminé, pendant que lesdits moyens fournissent le signal d'alimentation au deuxième banc de condensateurs jusqu'à ce que la tension ne tombe au-dessous d'une deuxième valeur de seuil, inférieure à ladite première valeur de seuil de tension maximale.

4. Dispositif selon l'une ou plusieurs des revendications précédentes, dans lequel un moyen de connexion résistive relie les deux résistances de protection à thyristor l'une à l'autre dans les branches de protection contre les surtensions, et transfère ainsi le signal d'alimentation à dissiper dans la résistance de protection à thyristor vers le banc de condensateur de filtrage de l'inverseur qui se trouve séparé du signal d'alimentation.

5. Dispositif selon l'une ou plusieurs des revendications précédentes, dans lequel chaque inverseur est connecté un parallèle avec un banc de condensateurs de filtrage, un découpeur de commutation est connecté par son émetteur et par son collecteur à une branche de protection contre les surtensions, qui est en parallèle avec le banc de condensateurs en aval de l'interrupteur séparateur, ladite branche de protection contre les surtensions comprenant une résistance de protection à thyristor et une paire de diodes en série, l'une desquelles est en parallèle avec le découpeur et l'autre est en parallèle avec la résistance de protection à thyristor, une résistance étant mise en oeuvre pour relier les deux branches de protection contre les surtensions.

6. Locomotive électrique **caractérisée en ce qu'**elle comprend au moins deux bogies et au moins deux moteurs, chacun entraînant au moins un essieu de l'une desdits deux bogies ou de chacun desdits deux bogies, lesdits moteurs étant chacun commandé par un inverseur distinct d'un système de commande, ledit système comprenant un dispositif de précharge directe selon l'une ou plusieurs des revendications précédentes 1 a 5.

7. Procédé permettant de commander deux moteurs de traction, notamment de véhicules ferroviaires ou analogues, chacun desdits moteurs étant commandé par un inverseur distinct, lesdits inverseurs recevant en parallèle un signal d'alimentation en courant continu, chacun à travers une liaison à courant continu, un condensateur d'entrée de précharge étant connecté en parallèle avec chaque inverseur pour accumuler une quantité prédéterminée d'énergie électrique pour entraîner l'inverseur correspondant, pendant que la tension du signal d'alimentation dans la liaison à courant continu de chaque inverseur est sous contrôle,
**caractérisé en ce que** le signal d'alimentation est fourni en alternance à l'un ou à l'autre des deux inverseurs, lorsque qu'une surtension est détectée, ledit signal étant dévié du condensateur d'entrée de précharge de l'inverseur qui reçoit le signal d'alimentation fourni vers le condensateur d'entrée de précharge de l'inverseur qui ne reçoit pas le signal d'alimentation pour charger ledit condensateur.
